# EUROPEAN PATENT APPLICATION

(11) **EP 3 187 624 A1**
(43) Date of publication of application: **05.07.2017**
(21) Application number: 16201188.6
(22) Date of filing: 29.11.2016
(51) Int. Cl.: C23C 24/08, F01D 17/04, G01M 5/00

(54) **METHODS FOR MODIFYING COMPONENTS**

(30) Priority: 10.12.2015 US 201514964833
(71) Applicant: General Electric Company, Schenectady, NY 12345 (US)
(72) Inventor: GERMANN, Bryan Joseph, Greenville, SC 29615 (US)
(74) Representative: Pöpper, Evamaria

(57) **Abstract**

Methods for modifying components include disposing a ceramic material on an exterior surface of the component, wherein the component comprises a nickel-based or cobalt-based superalloy, and applying a local heat application to at least a portion of the ceramic material to bond it to the component, wherein the local heat application does not uniformly heat the entire component.

## Description

### BACKGROUND OF THE INVENTION

The subject matter disclosed herein relates to modifying components and, more specifically, to methods for modifying components by applying local heat (e.g., laser) applications to ceramic material disposed on components.

Some components may need to operate in environments comprising elevated temperatures and/or corrosive conditions. For example, turbomachines are widely utilized in fields such as power generation and aircraft engines. Such gas turbine systems include a compressor section, a combustor section, and at least one turbine section. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures may depend in part one or more protective coatings and/or on supplying a cooling air to the outer surfaces of the metal parts through various methods. The metal parts of these engines that are particularly subject to high temperatures, and thus require particular attention with respect to cooling, are the metal parts forming combustors and parts located aft of the combustor.

Moreover, the turbine components may experience stress and/or strain from various forces over its operational lifecycle. While various tools may be utilized to measure imparted stress and strain in relatively standard environments, the turbine components in turbine engines may experience hotter and/or more corrosive working conditions that may be unsuitable for such measurement tools. Ceramic material disposed on these and other components may help protect against the high temperatures, monitor any imparted stress or strain experienced at these high temperatures, and/or help tag, identify or track components at one or more points in their lifecycle.

Accordingly, alternative method for modifying components would be welcome in the art.

### BRIEF DESCRIPTION OF THE INVENTION

In one embodiment, a method for modifying a component is disclosed. The method includes disposing a ceramic material on an exterior surface of the component, wherein the component comprises a nickel-based or cobalt-based superalloy, and applying a local heat application to at least a portion of the ceramic material to bond it to the component, wherein the local heat application does not uniformly heat the entire component.

In another embodiment, a method for manufacturing a strain sensor on a component is disclosed. The method includes disposing a ceramic material on an exterior surface of the component to form a strain sensor comprising at least two reference points, wherein the component comprises a nickel-based or cobalt-based superalloy, and applying a local heat application to the strain sensor to bond it to the component, wherein the local heat application does not uniformly heat the entire component.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary component comprising a ceramic material deposited thereon according to one or more embodiments shown or described herein;
FIG. 2 is an exemplary method for modifying a component according to one or more embodiments shown or described herein;
FIG. 3 is cross section of ceramic material deposited on a component according to one or more embodiments shown or described herein;
FIG. 4 is a cross section of a local heat application on a component according to one or more embodiments shown or described herein;
FIG. 5 is a cross section of another exemplary ceramic material deposited on a component according to one or more embodiments shown or described herein;
FIG. 6 is a cross section of another local heat application on a component according to one or more embodiments shown or described herein; and,
FIG. 7 is an exemplary strain sensor according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

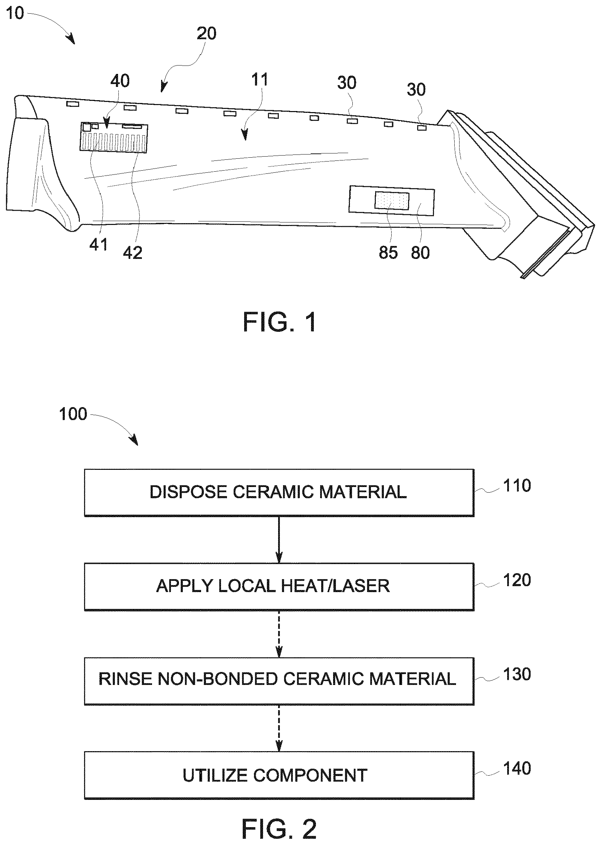

Referring to FIG. 1, a component 10 is illustrated with various ceramic materials 20 deposited thereon in accordance with the methods for modifying a component 10 disclosed herein.

The component 10 can comprise a variety of types of components used in a variety of different applications, such as, for example, components utilized in high temperature applications (e.g., components comprising nickel or cobalt based superalloys). For example, the component 10 may comprise a nickel-based or cobalt-based superalloy.

In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece, casing or generator component. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

Referring also to FIG. 2, a method 100 is illustrated for modifying a component 10. The method 100 can generally comprise disposing a ceramic material 20 on an exterior surface 11 of the component in step 110, wherein the component 10 comprises a nickel-based or cobalt-based superalloy. The method 100 can further comprise applying a local heat application (e.g., via a heat apparatus 50) in step 120 to at least a portion of the ceramic material to bond it to the component 10, wherein the local heat application does not uniformly heat the entire component 10. In some embodiments, the ceramic material 20 disposed on the exterior surface 11 of the component 10 forms a strain sensor 40 comprising at least two reference points 41 and 42. In some embodiments, the local heat application may comprise a local laser application (e.g., via a laser 55). In even some embodiments, the ceramic material 20 disposed on the exterior surface 11 of the component 10 may be disposed at least partially adjacent a pre-existing coating 80. The method 100, its variations and its respective elements will further be disclosed and described herein.

The ceramic material 20 disposed on the exterior surface 11 of the component in step 110 of method 100 can comprise any suitable material for deposition and subsequent bonding to the component 10 via an application of heat (e.g., via laser). The ceramic material 20 may provide increased temperature survivability compared to other materials to protect the underlying component 10 and/or provide a durable fiducial feature for monitoring the component 10. For example, in some embodiments, the ceramic material 20 may comprise yttria stabilized zirconia (also referred to as "YSZ") or any other thermal barrier coating material. In such embodiments, the yttria stabilized zirconia may comprise, for example, YSZ-D111.

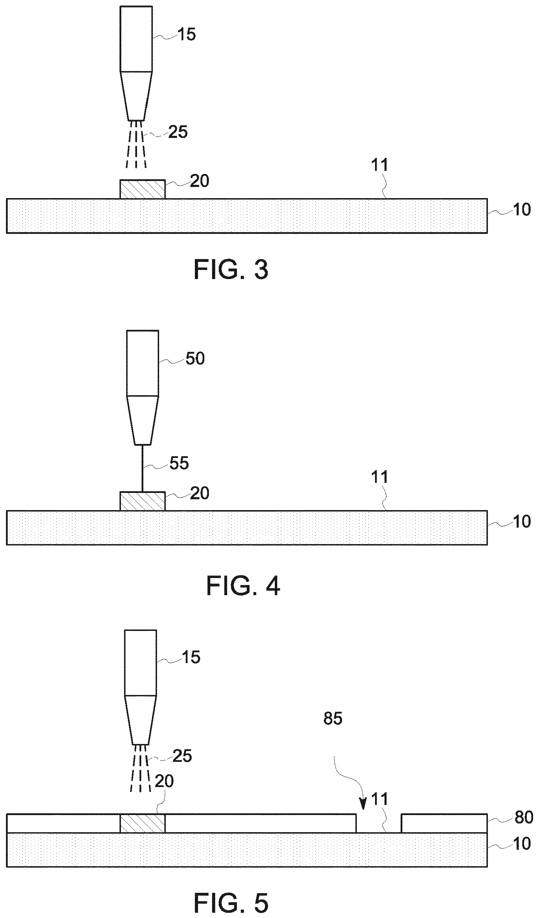

In some embodiments, the ceramic material 20 disposed in step 110 may comprise a sprayable ceramic material 25 (such as illustrated in FIGS. 3 and 5). In these and other embodiments, disposing the sprayable ceramic material 25 on the exterior surface 11 of the component 10 in step 110 comprises spraying the sprayable ceramic material 25 onto the exterior surface 11 of the component 10.

The sprayable ceramic material 25 can comprise any combination of constituents to help facilitate the sprayability of the ceramic material 20 such as via a spray gun type deposition apparatus 15. For example, the sprayable ceramic material 25 may comprise one or more binders, plasticizers and/or solvents to facilitate sprayability as should be appreciated by those of ordinary skill in the art. The sprayable ceramic material 25 may even be sprayable at room temperature to facilitate flexibility in the application process.

In even some embodiments, the ceramic material 20 disposed on the exterior surface 11 of the component 10 in step 110 may comprise a photo-reactant material. The photo-reactant material may comprise any material that reacts to a light applied during the heat application in step 120 to assist in the bonding of the ceramic material 20 to the component 10. For example, in some embodiments, the photo-reactant material may react with a wavelength of a local laser application applied in step 120. Such embodiments may help facilitate the overall bonding of the ceramic material 20 to the component 10 by providing one or more additional bonding mechanisms such as providing phase changes, reactions, and/or any other interactive result triggered by the laser 55 and the photo-reactant material.

With additional reference to FIGS. 1, 3 and 5, the ceramic material 20 disposed on the exterior surface 11 of the component 10 in step 110 of method 100 may be disposed via a variety of methods and in a variety of configurations. For example, as discussed above, the ceramic material 20 may be disposed via any suitable deposition apparatus 15 such as a spray gun, brush, dropper, tank, printer or the like.

In some embodiments, the ceramic material 20 disposed on the exterior surface 11 may be disposed in a thin layer. The thin layer may comprise any height away from the exterior surface 10 that causes negligible performance variation in the component 10.

In some embodiments, the ceramic material 20 may be disposed only onto a portion of the exterior surface 11 of the component 10 (i.e., such that the ceramic material 20 does not coat the entire exterior surface 11 of the component 10). Such embodiments may be utilized when the ceramic material 20 is only needed to modify performance of the component in certain areas and/or when the ceramic material 20 is only utilized for tracking features (e.g., part identification or strain sensor applications as will be discussed herein).

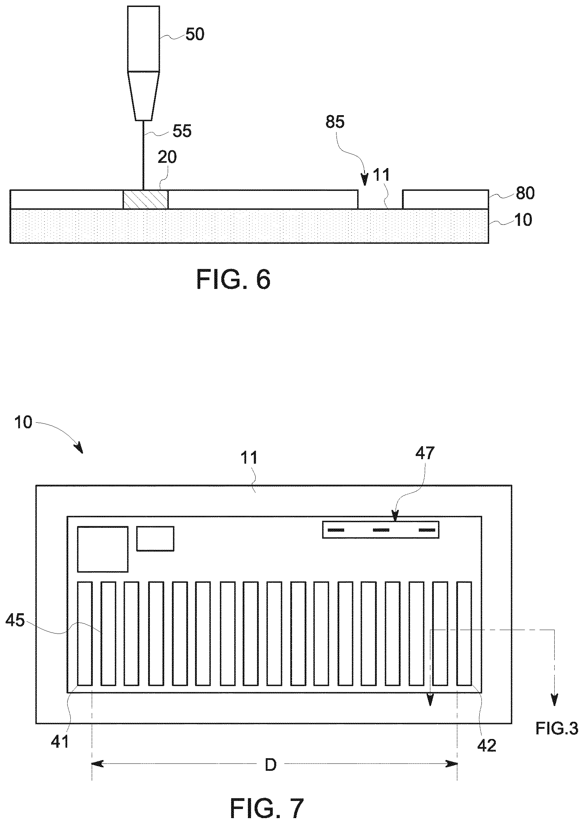

For example, referring additionally to FIGS. 1 and 7, in some embodiments, the ceramic material 20 deposited on the component 10 may comprise a strain sensor 40. The strain sensor 40 can generally comprise at least two reference points 41 and 42 that can be used to measure the distance D between said at least two reference points 41 and 42 at a plurality of time intervals. As should be appreciated to those skilled in the art, these measurements can help determine the amount of strain, strain rate, creep, fatigue, stress, etc. at that region of the component 10. The at least two reference points 41 and 42 can be disposed at a variety of distances and in a variety of locations depending on the specific component 10 so long as the distance D there between can be measured. The at least two reference points 41 and 42 may comprise dots, lines, circles, boxes or any other geometrical or non-geometrical shape so long as they are consistently identifiable and may be used to measure the distance D there between. Moreover, the strain sensor 40 may comprise an exterior edge and, depending on the configuration of the strain sensor 40, potentially one or more interior edges.

The strain sensor 40 may comprise a variety of different configurations and cross-sections such as by incorporating a variety of differently shaped, sized, and positioned reference points 41 and 42. For example, as illustrated in FIG. 7, the strain sensor 40 may comprise a variety of different reference points comprising various shapes and sizes. Such embodiments may provide for a greater variety of distance measurements D such as between the outer most reference points (as illustrated), between two internal reference points, or any combination there between. The greater variety may further provide a more robust strain analysis on a particular portion of the component 10 by providing strain measurements across a greater variety of locations.

Furthermore, the dimensions of the strain sensor 40 may depend on, for example, the component 10, the location of the strain sensor 40, the targeted precision of the measurement, deposition technique, and optical measurement technique. For example, in some embodiments, the strain sensor 40 may comprise a length and width ranging from less than 1 millimeter to greater than 300 millimeters. Moreover, the strain sensor 40 may comprise any thickness that is suitable for deposition and subsequent identification without significantly impacting the performance of the underlying component 10. For example, in some embodiments, the strain sensor 40 may comprise a thickness of less than from about .1 millimeters to greater than 1 millimeter. In some embodiments, the strain sensor 40 may have a substantially uniform thickness. Such embodiments may help facilitate more accurate measurements for subsequent strain calculations between the first and second reference points 41 and 42.

In some embodiments, the strain sensor 40 may comprise a positively deposited square or rectangle wherein the first and second reference points 41 and 42 comprise two opposing sides of said square or rectangle. In other embodiments, the strain sensor 40 may comprise at least two deposited reference points 41 and 42 separated by negative space 45 (i.e., an area in which ceramic material 20 is not deposited). The negative space 45 may comprise, for example, an exposed portion 12 of the exterior surface of the component 10. Alternatively or additionally, the negative space 45 may comprise a coating that helps protect at least a portion of the component 10 and/or strain sensor 40.

As illustrated in FIG. 7, in even some embodiments, the strain sensor 40 may be deposited to form a unique identifier 47 (hereinafter "UID"). The UID 47 may comprise any type of barcode, label, tag, serial number, pattern or other identifying system that facilitates the identification of that particular strain sensor 40. In some embodiments, the UID 47 may additionally or alternatively comprise information about the component 10 (e.g., turbine component) or the system or machine that the component 10 is incorporated into (e.g., gas or steam turbine). The UID 47 may thereby assist in the identification and tracking of particular strain sensors 40, components 10 or even overall systems or machines to help correlate measurements for past, present and future operational tracking.

With additional reference to FIGS. 1 and 5, in some embodiments where the ceramic material 20 may be disposed only onto a portion of the exterior surface 11 of the component 10, the ceramic material 20 may be disposed on the exterior surface 11 of the component 10 at least partially adjacent a pre-existing coating 80. Such embodiments may be realized when trying to modify a component 10 that already had a coating disposed thereon. For example, a pre-existing coating 80 may have a void 85 (e.g., missing material) caused from corrosion, erosion or any other mechanism during utilization of the component 10. The ceramic material 20 disposed on step 110 may then be deposited adjacent the pre-existing coating 80 to modify (e.g., repair) the void 85 or other area that needs a new or replacement coating.

With particular reference to FIG. 1, in some embodiments, the ceramic material 20 may be applied as a patch 30 onto one or more portions of the exterior surface 11 of the component 10. For example, the patch 30 may be applied to areas of the component that may experience relatively higher temperatures during component utilization thereby benefiting from additional ceramic material 20. In embodiments when the component 10 comprises a turbine blade, the ceramic material 20 may be applied as a patch 30 towards the leading edge of the airfoil of the turbine blade as illustrated in FIG. 1.

With exemplary reference to FIGS. 1-2, 4 and 6, the local heat application (e.g., local laser application) can be applied in step 120 of method 100 to at least a portion of the ceramic material 20 to bond it to the component 10. The local heat application can be applied in step 120 via any suitable heat apparatus 50 and for any suitable temperature and time that facilitates the bonding of at least the portion of ceramic material 20 to the component 10 without uniformly heating the entire component 10 (e.g., without placing the entire component 10 in an oven). Such embodiments may facilitate the bonding of a finite amount of ceramic material 20 to the component 10 while reducing the time and expense that may be required for uniformly heating the entire component 10.

For example, in some embodiments, the heat apparatus 50 that applies the local heat application in step 120 may comprise an induction coil. In some embodiments, the heat apparatus 50 may comprise a heat gun, torch, flame, or the like. In even some embodiments, the local heat application applied in step 120 may comprise an exothermic chemical reaction. For example, the ceramic material 20, component 10, and/or one or more other materials may go through an exothermic chemical reaction proximate the ceramic material 20 to provide an increase in temperature suitable for bonding the ceramic material 20 to the component 10.

As best illustrated in FIGS. 4 and 6, in some embodiments, step 120 of method 100 may comprise applying a local laser application to at least the portion of the ceramic material 20 to bond it to the component 10. In such application, the laser 55 may comprise any suitable power and configuration suitable to bond the ceramic material 20 to the component 10. For example, in some embodiments the laser 55 may comprise a power of at least 40 watts, 80 watts or more. In even some embodiments, the laser 55 may comprise a power of less than 40 watts such as, for example, an 8 Watt YVO4 crystal YAG laser. In some embodiments, the laser 55 may comprise a pulsed laser. In even some embodiments, the laser 55 may bond the ceramic material 20 to the component 10 via multiple passes.

With additional reference to FIG. 2, in even some embodiments, the component 10 may comprise a turbine component, the method 100 may further comprise utilizing the turbine component in operation of a turbine (e.g., gas turbine or steam turbine) and applying the local heat application in step 120 may occur via operation of the turbine. The operation of the turbine may cause elevated temperatures sufficient to bond the ceramic material 20 to the component 10. For example, the ceramic material 20 may initially be held in place on the component 10 via an adhesive or the like, and the operation of the turbine may cause an elevated temperature sufficient to bond the ceramic material 20 to the component 10 (and potentially burn off the adhesive material). Such embodiments may streamline the overall method 100 by limiting the amount of processing steps prior to utilization of the component 10.

Still referring to FIG. 2, in some embodiments the method 100 may comprise one or more additional steps. For example, in some embodiments, the method 100 may further comprise removing a non-bonded portion of the ceramic material 20 (e.g., the portion of the ceramic material 20 that did not receive a local heat application) in step 130. In embodiments where method 100 comprises applying a local laser application in step 120, the method 100 may further comprise removing the non-lasered portion of the ceramic material 20 from the component 10. In embodiments comprising removal of the non-bonded portion of the ceramic material 20 (e.g., non-lasered portion of the ceramic material 20), removal may comprise any suitable process. For example, removing the non-bonded (e.g., non-lasered) portion of the ceramic material 20 from the component 10 may occur via rinsing the component 10. Alternatively or additionally, removing the non-bonded (e.g., non-lasered) portion of the ceramic material 20 from the component 10 may occur via blowing, brushing, scraping or any other suitable mechanism.

As discussed above, in even some embodiments, method 100 may further comprise utilizing the component 10 in step 140. For example, the bonding of the ceramic material 20 to a portion of the exterior surface of the component 10 may allow for the component 10 to be re-utilized. In such embodiments, the modified (e.g., repaired) component 10 may thus be suitable for utilization in a larger system (e.g., turbine machine).

It should now be appreciated that methods for modifying components disclosed herein may facilitate the bonding of ceramic material to a component without requiring a large-scale heat application to the entire component. The local heat applications (e.g., laser applications) may apply suitable energy for bonding the ceramic material where needed onto the component, without subjecting the entire component to the same elevated temperatures.

While the invention has been described in detail in connection with only a limited number of embodiments, it should be readily understood that the invention is not limited to such disclosed embodiments. The invention is not to be seen as limited by the foregoing description, but is only limited by the scope of the appended claims.

## Claims

1. A method for modifying a component (10), the method comprising:
disposing a ceramic material (20) on an exterior surface (11) of the component (10), wherein the component (10) comprises a nickel-based or cobalt-based superalloy; and,
applying a local heat application to at least a portion of the ceramic material (20) to bond it to the component (10), wherein the local heat application does not uniformly heat the entire component (10).

2. The method of claim 1, wherein applying the local heat application occurs via an induction coil, a laser (55), or via an exothermic chemical reaction.

3. The method of claim 1 or claim 2, wherein the ceramic material (20) comprises yttria stabilized zirconia.

4. The method of one of the foregoing claims, wherein ceramic material (20) is disposed only onto a portion of the exterior surface (11) of the component (10).

5. The method of claim 4, wherein the ceramic material (20) disposed on the exterior surface (11) of the component (10) comprises a strain sensor (40) comprising at least two reference points (41, 42).

6. The method of one of the foregoing claims, wherein the method further comprises utilizing a turbine component as component (10) in operation of a turbine.

7. The method of claim 6, wherein applying the local heat application occurs via the operation of the turbine.

8. A method for manufacturing a strain sensor (40) on a component (10), the method comprising:
disposing a ceramic material (20) on an exterior surface (11) of the component (10) to form a strain sensor (40) comprising at least two reference points (41, 42), wherein the component (10) comprises a nickel-based or cobalt-based superalloy; and,
applying a local heat application to the strain sensor (40) to bond it to the component (10), wherein the local heat application does not uniformly heat the entire component (10).

9. The method of claim 8, wherein applying the local heat application occurs via an induction coil, via a laser (55), or via an exothermic chemical reaction.

10. The method of claim 8 or claim 9, wherein the component (10) comprises a turbine component (10).

11. The method of claim 10, wherein the method further comprises utilizing the turbine component (10) in operation of a turbine.

12. The method of claim 10 or claim 11, wherein applying the local heat application occurs via the operation of the turbine.

13. The method of one of the foregoing claims 10 to 12, wherein the turbine component (10) comprises a turbine blade.

14. The method of one of the foregoing claims 8 to 13, wherein the ceramic material (20) comprises yttria stabilized zirconia.
